# EUROPEAN PATENT SPECIFICATION

(11) **EP 3 890 294 B1**
(45) Date of publication and mention of the grant of the patent: **04.10.2023**
(21) Application number: 20904241.5
(22) Date of filing: 01.12.2020
(51) Int. Cl.: H04N 21/234, H04N 21/2343, H04N 21/454, H04N 21/845, H04N 21/858, H04N 21/475, H04N 21/44

(54) **METHOD AND APPARATUS FOR EXTRACTING HOTSPOT SEGMENT FROM VIDEO**
VERFAHREN UND VORRICHTUNG ZUM EXTRAHIEREN VON HOT-CLIPS IN EINEM VIDEO
PROCÉDÉ ET APPAREIL D'EXTRACTION DE SEGMENT DE POINT D'ACCÈS SANS FIL À PARTIR D'UNE VIDÉO

(30) Priority: 21.02.2020 CN 202010108683
(43) Date of publication of application: 06.10.2021
(73) Proprietor: BEIJING BAIDU NETCOM SCIENCE AND TECHNOLOGY CO. LTD., 100085 Beijing (CN)
(72) Inventor: ZHANG, Qian, 100085 Beijing (CN)
(74) Representative: Zimmermann, Tankred Klaus
(86) International application number: PCT/CN2020/133034
(87) International publication number: WO 2021/164369

(56) References cited:
- WO-A1-2016/054916
- WO-A1-2018/171325
- WO-A1-2018/171325
- CN-A- 105 939 494
- CN-A- 109 104 642
- CN-A- 109 151 558
- CN-A- 109 151 558
- CN-A- 110 267 119
- CN-A- 111 277 861
- US-A1- 2018 061 459
- US-B1- 9 578 279
- BHAUMIK HRISHIKESH ET AL: "Enhancement of perceptual quality in static video summarization using minimal spanning tree approach", 2015 IEEE INTERNATIONAL CONFERENCE ON SIGNAL PROCESSING, INFORMATICS, COMMUNICATION AND ENERGY SYSTEMS (SPICES), IEEE, 19 February 2015 (2015-02-19), pages 1-7, XP032765473, DOI: 10.1109/SPICES.2015.7091401 [retrieved on 2015-04-21]

## Description

### TECHNICAL FIELD

The present disclosure relates to a field of Internet technology, and in particular to a method and apparatus of extracting a hot clip in a video, an electronic device, and a computer-readable storage medium, in the multimedia processing technology.

### BACKGROUND

With development of Internet technology, videos in network are present in increasingly diversified forms, and acquisition of wonderful or important content in a video has increasingly become a core demand of users.

In a related art, users generally perform multiple speed play, skip play, and other operations to quickly watch videos. However, multiple speed play has a poor audio experience, and skip play is not easy to control a progress so that it is easy to miss some content in a case of much skip progress, or to watch repeated content in a case of too little skip progress. Therefore, there is a need to provide a method with which users may conveniently and accurately watch a hot clip in a video.

US 2018/061459 A1 discloses systems and methods for improving interactions with and between computers in content searching, generating, hosting and/or providing systems supported by or configured with personal computing devices, servers and/or platforms. The systems interact to identify and retrieve data within or across platforms, which can be used to improve the quality of data used in processing interactions between or among processors in such systems. The disclosed systems and methods automatically generate a thumbnail image from a frame of a video file, where the thumbnail image displays content of a selected frame determined to be high-quality and highly-relevant to the content of the video file. Frames of a video file are analyzed, and the frame that is the most contextually relevant to the video and of the highest visual quality is selected, where a thumbnail image is generated and displayed on a site or application over a network.

US 9578279B1 discloses a system and method for generating preview data from video data and using the preview data to select portions of the video data or determine an order with which to upload the video data. The system may sample video data to generate sampled video data and may identify portions of the sampled video data having complexity metrics exceeding a threshold. The system may upload a first portion of the video data corresponding to the identified portions while omitting a second portion of the video data. The system may determine an order with which to upload portions of the video data based on a complexity of the video data. Therefore, portions of the video data that may require additional processing after being uploaded may be prioritized and uploaded first. As a result, a latency between the video data being uploaded and a video summarization being received is reduced.

WO 2018/171325 A1 discloses a video hot spot fragment extraction method, a piece of user equipment and a server, which relate to the communication field and can solve the problems that the access of a hot spot fragment by users is low in accuracy and that some hot spot fragment cannot be extracted or presented to the users. According to the attribute information of users, the server divides the users into a plurality of user groups. Based on the operation information of each user group among the user groups when the user group watches the video contents, the hot spot fragments of the video contents each user group watches are obtained; and then, according to the hot spot fragments of the video contents each user group watches, obtaining the hot spot fragment label corresponding to each user group; and the hot spot fragment label corresponding to each user group is transmitted to the user equipment corresponding to the user group. The embodiments of the invention can be applied to present different hot spot fragments to different user groups.

XP032765473 (BHAUMIK HRISHIKESH ET AL: "Enhancement of perceptual quality in static video summarization using minimal spanning tree approach", 2015 IEEE INITERNATIONAL CONFERENCE ON SIGNAL PROCESSING, INFORMATICS, COMMUNICATION ANO ENERGY SYSTEMS (SPICES), IEEE, 19 February 2015 (2015-02-19), pages 1-7, DOI: 10.1109/SPICES.2015.7091401) discloses that a video summarization technique is proposed in this work using minimal spanning tree (MST) of data points. The data points correspond to image frames of a shot in the video which is to be summarized. Correlation is chosen as a similarity metric for computing the edge weights of the MST. The representative frames for each shot are chosen by computing the density of each data point. A novel method for redundancy reduction is devised using SURF and GIST. The redundant frames are eliminated for concise repre sentation of the video.

### SUMMARY

The invention is set out by the appended set of claims.

The embodiments in the present disclosure have following advantages or beneficial effects. The present disclosure may improve the accuracy of extracting the hot clip so as to enable the user to watch wonderful content in the video more accurately and conveniently, and may also effectively reduce the size of the hot clip so as to reduce a waste of user memory resources and bandwidth. Because the hot clip in the video is extracted by two optimization processes, the technical problem in a related art that the user can not accurately watch the wonderful content in a case of multiple speed play or skip play may be solved. The accuracy of extracting the hot clip may be improved, and the size of the hot clip may be reduced, so that the waste of user memory resources and bandwidth may be reduced.

Other effects of the optional manners described above will be described below in conjunction with specific embodiments.

### BRIEF DESCRIPTION OF THE DRAWINGS

The drawings are used to better understand the present disclosure and do not constitute a limitation to the present disclosure, in which:
FIG. 1 shows a flowchart of a method of extracting a hot clip in a video according to a first embodiment of the present disclosure;
FIG. 2 shows a structural diagram of an apparatus of extracting a hot clip in a video according to a second embodiment of the present disclosure; and
FIG. 3 shows a block diagram of an electronic device for implementing the method of extracting the hot clip in the video according to the embodiments of the present disclosure.

### DETAILED DESCRIPTION OF EMBODIMENTS

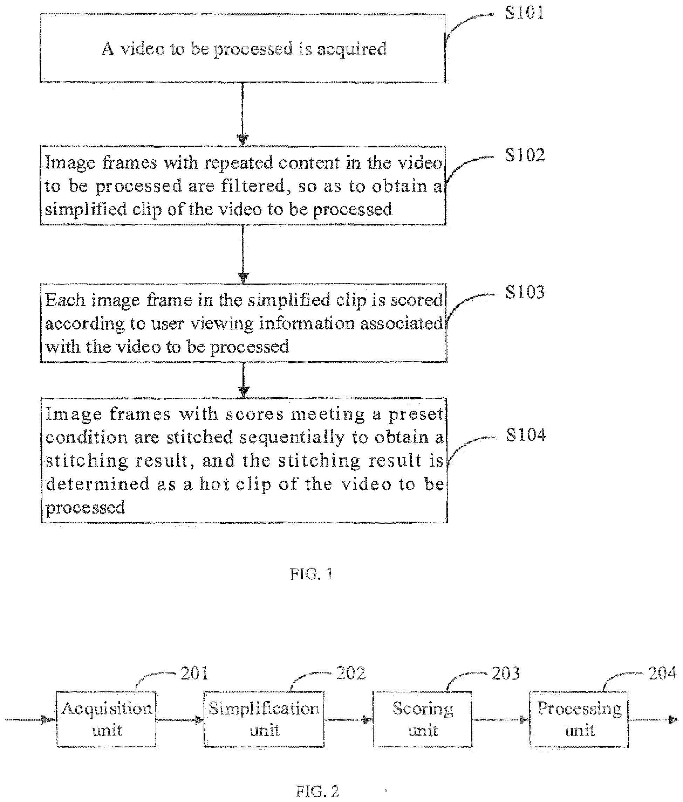

FIG. 1 shows a flowchart of a method of extracting a hot clip in a video according to the embodiments of the present disclosure. As shown in FIG. 1, the method includes following steps.

In step S101, a video to be processed is acquired.

The video to be processed acquired in this step may be an ordinary video, such as TV series, variety show, film and the like, or may be a short video.

It may be understood that in this step, after the video to be processed is acquired, a video image sequence of the video to be processed (that is, a sequence of image frames in the video to be processed) may be further acquired. Acquisition of the video image sequence is a related art, and detailed descriptions will be omitted to avoid redundancy.

In step S 102, image frames with repeated content in the video to be processed are filtered, so as to obtain a simplified clip of the video to be processed.

In this step, after the image frames with repeated content in the video to be processed acquired in step S 101 are filtered, stitching remaining image frames that are not filtered out to obtain a stitching result, and the stitching result is determined as a simplified clip of the video to be processed. That is, in this step, repetitive image frames in the video may be removed, so as to optimize a size of the video, and reduce a waste of user memory resources and bandwidth.

Specifically, in this step, the filtering image frames with repeated content in the video to be processed includes: acquiring a video image sequence of the video to be processed; calculating a content repetitive rate between image frames in the video image sequence, for example, calculating sequentially from an image frame at the beginning of the video to an image frame at the end of the video, and a content repetitive rate between two or more adjacent image frames in the video image sequence acquired; determining whether the content repetitive rate exceeds a first threshold or not; retaining, in response to determining that the content repetitive rate exceeds the first threshold, one of repetitive image frames in the video image sequence and filtering out the other image frames in the repetitive image frames; and retaining, in response to determining that the content repetitive rate does not exceed the first threshold, the image frames in the video image sequence.

In this step, a pre-trained depth learning model may be used for calculating the content repetitive rate between the image frames. That is, each frame image is taken as an input of the depth learning model, and an output result of the depth learning model is taken as the content repetitive rate between the image frames.

In addition, in this step, the content repetitive rate between the image frames may also be calculated by using pixel information in the image frames, such as an average gray value of pixels in the image frame, a hash value of the pixels in the image frame, and so on. Detailed descriptions will be omitted to avoid redundancy.

It may be understand that in this step, the filtering image frames with repeated content in the video to be processed may include: inputting a video image sequence of the video to be processed into a pre-trained image filtering model that may filter the image frames with repeated content in the video image sequence, and obtaining the simplified clip of the video to be processed according to an output result of the image filtering model.

In this step, after the image frames with repeated content in the video to be processed are filtered, the remaining image frames have different contents. The remaining image frames are stitched sequentially to obtain a stitching result, and the stitching result is determined as a corresponding simplified clip of the video to be processed.

In step S103, each image frame in the simplified clip is scored according to user viewing information associated with the video to be processed.

In this step, the user viewing information associated with the video to be processed acquired in step S 101 is firstly acquired, and then each image frame in the simplified clip obtained in step S 102 is scored according to the acquired user viewing information, so as to determine a scoring result of each image frame in the simplified clip.

Specifically, in this step, the user viewing information associated with the video to be processed is acquired by counting viewing behaviors of all users viewing the video to be processed. The user viewing information includes at least one of a number of times each image frame in the video to be processed is marked by a user and a number of times each image frame in the video to be processed is validly viewed by the user.

The number of times each image frame in the video to be processed marked by the user indicates a number of times an image frame containing important or wonderful content marked by the user when the user is watching the video to be processed. The more times the image frame is marked, the more important or wonderful the content of the image frame.

Specifically, in this step, the acquiring the number of times each image frame in the video to be processed is marked by the user may include: providing a mark button that may be manually triggered by the user or may be triggered by user's voice, in a process of playing the video to be processed; and counting a number of times the mark button is triggered for each image frame in the process of playing the video to be processed, as the number of times each image frame in the video to be processed is marked by the user.

The number of times each image frame in the video to be processed is validly viewed by the user indicates a number of times an image frame is played at a normal speed without fast forward, multiple speed play, skip play, etc. when the user is watching the video to be processed. The more times the image frame is validly viewed, the more important or wonderful the content of the image frame.

Specifically, in this step, the acquiring the number of times each image frame in the video to be processed is validly viewed by the user may include: determining a playing speed for each image frame in the process of playing the video to be processed; and counting a number of times each image frame in the video to be processed is played at a normal speed, as the number of times each image frame in the video to be processed is validly viewed by the user.

The user viewing information acquired in this step reflects importance or brilliance of each image frame in the video to be processed, and each image frame in the simplified clip is scored according to the user viewing information. In this way, the scoring result obtained in this step may indicate the importance or brilliance of different image frames.

Specifically, in this step, the scoring each image frame in the simplified clip according to user viewing information associated with the video to be processed may include: acquiring a first weight of each image frame being marked and a second weight of each image frame being validly viewed, in which the first weight and the second weight are preset; obtaining a first score of each image frame according to the number of times each image frame is marked and the first weight, and obtaining a second score of each image frame according to the number of times each image frame is validly viewed and the second weight; adding the first score and the second score, and determining a sum of the first score and the second score as a score of each image frame.

For example, in a case that the first weight is preset to 1 and the second weight is preset to 0.8, if the number of times an image frame is marked is 100 and the number of times the image frame is validly viewed is 200, then the scoring result of the image frame is determined to: (100^{∗}1) + (200^{∗}0.8)=260.

In step S104, image frames with scores meeting a preset condition are stitched sequentially to obtain a stitching result, and the stitching result is determined as a hot clip of the video to be processed.

In this step, after the scoring result for each image frame in the simplified clip is obtained in step S103, the image frames with scores meeting the preset condition are selected from the image frames of the simplified clip, and are then stitched sequentially to obtain the stitching result that is determined as the hot clip of the video to be processed. That is, after a first optimization of the video to be processed is performed in step S102, a second optimization is performed in this step on the basis of a result of the first optimization, so that the hot clip does not contain redundant and repeated image frames. In this way, the hot clip of the video to be processed may be obtained more accurately.

In this step, image frames with scores greater than a second threshold may be selected as the image frames meeting the preset condition. Alternatively, the image frames may be sorted according to scores from high to low, and top N image frames may be selected, where N is a positive integer greater than or equal to 1.

It may be understand that in this step, after the hot clip of the video to be processed is obtained, the video to be processed and the corresponding hot clip may be together displayed to the user, so that the user may more flexibly select the corresponding version for watching according to the actual needs.

Therefore, in the present disclosure, two optimization processes are performed to extract the hot clip of the video to be processed, which may enable the user to watch wonderful content in the video more accurately and conveniently, and may also effectively reduce a size of the hot clip so that a waste of user memory resources and bandwidth may be reduced.

FIG. 2 shows a structural diagram of an apparatus of extracting a hot clip in a video according to the embodiments of the present disclosure. As shown in FIG. 2, the apparatus includes an acquisition unit 201, a simplification unit 202, a scoring unit 203 and a processing unit 204.

The acquisition unit 201 is used to acquire a video to be processed.

The video to be processed acquired by the acquisition unit 201 may be an ordinary video, such as TV series, variety show, film and the like, or may be a short video.

It may be understood that after acquiring the video to be processed, the acquisition unit 201 may further acquire a video image sequence of the video to be processed (that is, a sequence of image frames in the video to be processed). Acquisition of the video image sequence is a related art, and detailed descriptions will be omitted to avoid redundancy.

The simplification unit 202 is used to filter image frames with repeated content in the video to be processed, so as to obtain a simplified clip of the video to be processed.

After filtering the image frames with repeated content in the video to be processed acquired by the acquisition unit 201, the simplification unit 202 may stitch remaining image frames that are not filtered out to obtain a stitching result, and determine the stitching result as a simplified clip of the video to be processed. That is, the simplification unit 202 may remove repetitive image frames in the video, so as to optimize the size of the video and reduce the waste of user memory resources and bandwidth.

Specifically, in the filtering the image frames with repeated content in the video to be processed, the simplification unit 202 may perform following operations: acquiring a video image sequence of the video to be processed; calculating a content repetitive rate between image frames in the video image sequence, for example, calculating sequentially from an image frame at the beginning of the video to an image frame at the end of the video, the content repetitive rate between two or more adjacent image frames in the video image sequence; determining whether the content repetitive rate exceeds a first threshold or not; retaining, in response to determining that the content repetitive rate exceeds the first threshold, one of repetitive image frames in the video image sequence and filtering out the other image frames in the repetitive image frames; and retaining, in response to determining that the content repetitive rate does not exceed the first threshold, the image frames in the video image sequence.

When the content repetitive rate between the image frames is calculated by the simplification unit 202, a pre-trained depth learning model may be used for calculation. That is, each frame image is taken as an input of the depth learning model, and an output result of the depth learning model is taken as the content repetitive rate between the image frames.

In addition, the simplification unit 202 may also calculate the content repetitive rate between the image frames by using pixel information in the image frames, such as an average gray value of pixels in the image frame, a hash value of the pixels in the image frame, and so on. Detailed descriptions will be omitted to avoid redundancy.

It may be understand that in the filtering the image frames with repeated content in the video to be processed, the simplification unit 202 may also perform following operations: inputting a video image sequence of the video to be processed into a pre-trained image filtering model that may filter the image frames with repeated content in the video image sequence, and determining the simplified clip of the video to be processed according to an output result of the image filtering model.

After the image frames with repeated content in the video to be processed are filtered by the simplification unit 202, the remaining image frames have different contents. The remaining image frames may be stitched sequentially to obtain a stitching result, and the stitching result obtained may be determined as a corresponding simplified clip of the video to be processed.

The scoring unit 203 is used to score each image frame in the simplified clip according to user viewing information associated with the video to be processed.

The scoring unit 203 may firstly acquire the user viewing information associated with the video to be processed, and then score, according to the acquired user viewing information, each image frame in the simplified clip obtained by the simplification unit 202, so as to determine a scoring result of each image frame in the simplified clip.

Specifically, the user viewing information associated with the video to be processed is acquired by the scoring unit 203 by counting viewing behaviors of all users viewing the video to be processed. The user viewing information contains at least one of a number of times each image frame in the video to be processed is marked by a user and a number of times each image frame in the video to be processed is validly viewed by the user.

The number of times each image frame in the video to be processed is marked by the user indicates a number of times an image frame containing important or wonderful content is marked by the user when the user is watching the video to be processed. The more times the image frame is marked, the more important or wonderful the content of the image frame.

Specifically, in the acquiring the number of times each image frame in the video to be processed is marked by the user, the scoring unit 203 may perform following operations: providing a mark button which may be manually triggered by the user or may be triggered by user's voice, in a process of playing the video to be processed; counting a number of times the mark button is triggered for each image frame in the process of playing the video to be processed, as the number of times each image frame in the video to be processed is marked by the user.

The number of times each image frame in the video to be processed is validly viewed by the user indicates a number of times an image frame is played at a normal speed without fast forward, multiple speed play, skip play, etc. when the user is watching the video to be processed. The more times the image frame is validly viewed, the more important or wonderful the content of the image frame.

Specifically, in the acquiring the number of times each image frame in the video to be processed is validly viewed by the user, the scoring unit 203 may perform following operations: determining a playing speed for each image frame in the process of playing the video to be processed; and counting a number of times each image frame in the video to be processed is played at a normal speed, as the number of times each image frame in the video to be processed is validly viewed by the user.

The user viewing information acquired by the scoring unit 203 reflects importance or brilliance of each image frame in the video to be processed, and each image frame in the simplified clip is scored by the scoring unit 203 according to the user viewing information. In this way, the scoring result obtained may indicate the importance or brilliance of different image frames.

Specifically, in the scoring each image frame in the simplified clip according to user viewing information associated with the video to be processed, the scoring unit 203 may perform following operations: acquiring a first weight of each image frame being marked and a second weight of each image frame being validly viewed, wherein the first weight and the second weight are preset; obtaining a first score of each image frame according to the number of times each image frame is marked and the first weight, and obtaining a second score of each image frame according to the number of times each image frame is validly viewed and the second weight; adding the first score and the second score, and determining a sum of the first score and the second score as a score of each image frame.

The processing unit 204 is used to stitch image frames with scores meeting a preset condition sequentially to obtain a stitching result, and determine the stitching result as a hot clip of the video to be processed.

After the scoring result of each image frame in the simplified clip is obtained by the scoring unit 203, the processing unit 204 may select the image frames with scores meeting the preset condition from the image frames of the simplified clip, then stitch the selected image frames sequentially to obtain the stitching result, and determine the stitching result as the hot clip of the video to be processed.

That is to say, after a first optimization of the video to be processed is performed by the simplification unit 202, the processing unit 204 may perform a second optimization on the basis of a result of the first optimization, so that the hot clip does not contain redundant and repeated image frames. In this way, the hot clip of the video to be processed may be obtained more accurately.

The processing unit 204 may select image frames with scores greater than a second threshold as the image frames meeting the preset condition. Alternatively, the image frames may be sorted according to scores from high to low, and top N image frames may be selected, where N is a positive integer greater than or equal to 1.

It may be understand that after obtaining the hot clip of the video to be processed, the processing unit 204 may display the video to be processed and the corresponding hot clip together to the user, so that the user may more flexibly select the corresponding version for watching according to the actual needs.

According to the embodiments of the present disclosure, the present disclosure further provides an electronic device and a computer-readable storage medium.

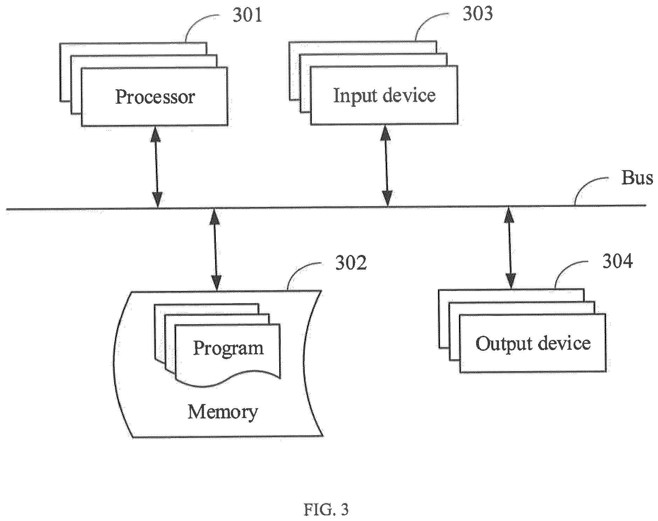

FIG. 3 shows a block diagram of an electronic device for implementing the method of extracting the hot clip of the video according to the embodiments of the present disclosure. The electronic device is intended to represent various forms of digital computers, such as a laptop computer, a desktop computer, a workstation, a personal digital assistant, a server, a blade server, a mainframe computer, and other suitable computers. The electronic device may further represent various forms of mobile devices, such as a personal digital assistant, a cellular phone, a smart phone, a wearable device, and other similar computing devices. The components as illustrated herein, and connections, relationships, and functions thereof are merely examples, and are not intended to limit the implementation of the present disclosure described and/or required herein.

As shown in FIG. 3, the electronic device may include one or more processors 301, a memory 302, and interface(s) for connecting various components, including high-speed interface(s) and low-speed interface(s). The various components are connected to each other by using different buses, and may be installed on a common motherboard or installed in other manners as required. The processor may process instructions executed in the electronic device, including instructions stored in or on the memory to display graphical information of GUI (Graphical User Interface) on an external input/output device (such as a display device coupled to an interface). In other embodiments, a plurality of processors and/or a plurality of buses may be used with a plurality of memories, if necessary. Similarly, a plurality of electronic devices may be connected in such a manner that each apparatus providing a part of necessary operations (for example, as a server array, a group of blade servers, or a multi-processor system). In FIG. 3, a processor 301 is illustrated by way of example.

The memory 302 is a non-transitory computer-readable storage medium provided by the present disclosure. The memory stores instructions executable by at least one processor, to cause the at least one processor to perform the method of extracting the hot clip in the video provided in the present disclosure. The non-transitory computer-readable storage medium of the present disclosure stores computer instructions for allowing a computer to perform the method of extracting the hot clip in the video provided in the present disclosure.

The memory 302, as a non-transitory computer-readable storage medium, may be used to store non-transitory software programs, non-transitory computer-executable programs and modules, such as program instructions/modules corresponding to the method of extracting the hot clip in the video in the embodiments of the present disclosure (for example, the acquisition unit 201, the simplification unit 202, the scoring unit 203 and the processing unit 204 shown in FIG. 2). The processor 301 executes various functional applications and data processing of the server by executing the non-transient software programs, instructions and modules stored in the memory 302, thereby implementing the method of extracting the hot clip in the video in the embodiments of the method mentioned above,.

The memory 302 may include a program storage area and a data storage area. The program storage area may store an operating system and an application program required by at least one function. The data storage area may store data etc. generated by using the electronic device. In addition, the memory 302 may include a high-speed random access memory, and may further include a non-transitory memory, such as at least one magnetic disk storage device, a flash memory device, or other non-transitory solid-state storage devices. In some embodiments, the memory 302 may optionally include a memory provided remotely with respect to the processor 301, and such remote memory may be connected through a network to the electronic device for the method of extracting the hot clip in the video. Examples of the above-mentioned network include, but are not limited to the Internet, intranet, local area network, mobile communication network, and combination thereof.

The electronic device for the method of extracting the hot clip in the video may further include an input device 303 and an output device 304. The processor 301, the memory 302, the input device 303 and the output device 304 may be connected by a bus or in other manners. In FIG. 3, the connection by a bus is illustrated by way of example.

The input device 303 may receive input information of numbers or character, and generate key input signals related to user settings and function control of the electronic device for the method of extracting the hot clip in the video, such as a touch screen, a keypad, a mouse, a track pad, a touchpad, a pointing stick, one or more mouse buttons, a trackball, a joystick, and so on. The output device 304 may include a display device, an auxiliary lighting device (for example, LED), a tactile feedback device (for example, a vibration motor), and the like. The display device may include, but is not limited to, a liquid crystal display (LCD), a light emitting diode (LED) display, and a plasma display. In some embodiments, the display device may be a touch screen.

Various embodiments of the systems and technologies described herein may be implemented in a digital electronic circuit system, an integrated circuit system, an application specific integrated circuit (ASIC), a computer hardware, firmware, software, and/or combinations thereof. These various embodiments may be implemented by one or more computer programs executable and/or interpretable on a programmable system including at least one programmable processor. The programmable processor may be a dedicated or general-purpose programmable processor, which may receive data and instructions from the storage system, the at least one input device and the at least one output device, and may transmit the data and instructions to the storage system, the at least one input device, and the at least one output device.

These computing programs (also referred as programs, software, software applications, or codes) include machine instructions for a programmable processor, and may be implemented using high-level programming languages, object-oriented programming languages, and/or assembly/machine languages. As used herein, the terms "machine-readable medium" and "computer-readable medium" refer to any computer program product, apparatus and/or device (for example, magnetic disk, optical disk, memory, programmable logic device (PLD)) for providing machine instructions and/or data to a programmable processor, including a machine-readable medium for receiving machine instructions as machine-readable signals. The term "machine-readable signal" refers to any signal for providing machine instructions and/or data to a programmable processor.

In order to provide interaction with the user, the systems and technologies described here may be implemented on a computer including a display device (for example, a CRT (cathode ray tube) or LCD (liquid crystal display) monitor) for displaying information to the user), and a keyboard and a pointing device (for example, a mouse or a trackball) through which the user may provide the input to the computer. Other types of devices may also be used to provide interaction with users. For example, a feedback provided to the user may be any form of sensory feedback (for example, visual feedback, auditory feedback, or tactile feedback), and the input from the user may be received in any form (including acoustic input, voice input or tactile input).

The systems and technologies described herein may be implemented in a computing system including back-end components (for example, a data server), or a computing system including middleware components (for example, an application server), or a computing system including front-end components (for example, a user computer having a graphical user interface or web browser through which the user may interact with the implementation of the system and technology described herein), or a computing system including any combination of such back-end components, middleware components or front-end components. The components of the system may be connected to each other by digital data communication (for example, a communication network) in any form or through any medium. Examples of the communication network include a local area network (LAN), a wide area network (WAN), and Internet.

The computer system may include a client and a server. The client and the server are generally far away from each other and usually interact through a communication network. The relationship between the client and the server is generated through computer programs running on the corresponding computers and having a client-server relationship with each other.

In the technical solutions according to the embodiments of the present disclosure, two optimization processes are performed to extract the hot clip of the video to be processed, which may improve accuracy of extracting the hot clip so that the user may watch wonderful content in the video more accurately and conveniently, and which may effectively reduce the size of the hot clip extracted so that the waste of user memory resources and bandwidth may be reduced.

## Claims

1. A method of extracting a hot clip in a video, comprising:
acquiring (S101) a video to be processed;
filtering (S102) image frames with repeated content in the video to be processed, so as to obtain a simplified clip of the video to be processed, wherein the simplified clip has image frames with different contents;
scoring (S103) each image frame in the simplified clip according to user viewing information associated with the video to be processed, wherein the user viewing information associated with the video to be processed contains at least one of: a number of times each image frame in the video to be processed is marked by a user, or a number of times each image frame in the video to be processed is validly viewed by the user determined by a number of times the image frame is played at a normal speed without fast forward, multiple speed play, or skip play; and
stitching (S104) image frames with scores meeting a preset condition sequentially to obtain a stitching result, and determining the stitching result as a hot clip of the video to be processed,
wherein the filtering image frames with repeated content in the video to be processed comprises:
acquiring a video image sequence of the video to be processed;
calculating a content repetitive rate between image frames in the video image sequence;
determining whether the content repetitive rate exceeds a first threshold or not;
retaining, in response to determining that the content repetitive rate exceeds the first threshold, one of repetitive image frames in the video image sequence and filtering out the other image frames in the repetitive image frames; and
retaining, in response to determining that the content repetitive rate does not exceed the first threshold, the image frames in the video image sequence,
and wherein the scoring (S103) each image frame in the simplified clip according to user viewing information associated with the video to be processed comprises:
acquiring a first weight of each image frame being marked and a second weight of each image frame being validly viewed;
obtaining a first score of each image frame according to the number of times each image frame is marked and the first weight, and obtaining a second score of each image frame according to the number of times each image frame is validly viewed and the second weight; and
adding the first score and the second score, and determining a sum of the first score and the second score as a score of each image frame.

2. The method of claim 1, wherein the acquiring the number of times each image frame in the video to be processed is marked by the user comprises:
providing a mark button in a process of playing the video to be processed; and
counting a number of times the mark button is triggered for each image frame in the process of playing the video to be processed, as the number of times each image frame in the video to be processed is marked by the user.

3. The method of any one of preceding claims, wherein the acquiring the number of times each image frame in the video to be processed is validly viewed by the user comprises:
determining a playing speed for each image frame in the process of playing the video to be processed; and
counting a number of times each image frame in the video to be processed is played at a normal speed, as the number of times each image frame in the video to be processed is validly viewed by the user.

4. The method of any one of preceding claims, further comprising:
displaying the video to be processed and the hot clip of the video to be processed to allow the user to select for watching.

5. An apparatus of extracting a hot clip in a video, comprising:
an acquisition unit (201) configured to acquire a video to be processed;
a simplification unit (202) configured to filter image frames with repeated content in the video to be processed, so as to obtain a simplified clip of the video to be processed, wherein the simplified clip has image frames with different contents;
a scoring unit (203) configured to score each image frame in the simplified clip according to user viewing information associated with the video to be processed, wherein for the scoring unit (203), the user viewing information associated with the video to be processed contains at least one of: a number of times each image frame in the video to be processed is marked by a user, and a number of times each image frame in the video to be processed is validly viewed by the user determined by a number of times the image frame is played at a normal speed without fast forward, multiple speed play, or skip play; and
a processing unit (204) configured to stitch image frames with scores meeting a preset condition sequentially to obtain a stitching result, and determine the stitching result as a hot clip of the video to be processed,
wherein the simplification unit (202), in the filtering image frames with repeated content in the video to be processed, is further configured to:
acquire a video image sequence of the video to be processed;
calculate a content repetitive rate between image frames in the video image sequence;
determine whether the content repetitive rate exceeds a first threshold or not;
retain, in response to determining that the content repetitive rate exceeds the first threshold, one of repetitive image frames in the video image sequence and filter out the other image frames in the repetitive image frames; and
retain, in response to determining that the content repetitive rate does not exceed the first threshold, the image frames in the video image sequence
and wherein the scoring unit (203), in the scoring each image frame in the simplified clip according to user viewing information associated with the video to be processed, is further configured to:
acquire a first weight of each image frame being marked and a second weight of each image frame being validly viewed;
obtain a first score of each image frame according to the number of times each image frame is marked and the first weight, and obtain a second score of each image frame according to the number of times each image frame is validly viewed and the second weight; and
add the first score and the second score, and determine a sum of the first score and the second score as a score of each image frame.

6. The apparatus of claim 5, wherein the scoring unit (203), in the acquiring the number of times each image frame in the video to be processed is marked by the user, is further configured to:
provide a mark button in a process of playing the video to be processed; and
count a number of times the mark button is triggered for each image frame in the process of playing the video to be processed, as the number of times each image frame in the video to be processed is marked by the user; or
the scoring unit (203), in the acquiring the number of times each image frame in the video to be processed is validly viewed by the user, is further configured to:
determine a playing speed for each image frame in the process of playing the video to be processed; and
count a number of times each image frame in the video to be processed is played at a normal speed, as the number of times each image frame in the video to be processed is validly viewed by the user.

7. A non-transitory computer-readable storage medium having computer instructions stored thereon, wherein the computer instructions allow a computer to implement the method of any one of claims 1 to 4.

8. A computer program comprising executable instructions configured to cause a computer to implement the method of any one of claims 1 to 4.

## Patentansprüche

1. Ein Verfahren zum Extrahieren eines Hot-Clips in einem Video, das folgende Merkmale aufweist:
Erfassen (S101) eines Videos, das verarbeitet werden soll;
Filtern (S102) von Bildrahmen mit wiederholtem Inhalt in dem Video, das verarbeitet werden soll, um einen vereinfachten Clip des Videos, das verarbeitet werden soll, zu erhalten, wobei der vereinfachte Clip Bildrahmen mit verschiedenen Inhalten aufweist;
Auswerten (S103) jedes Bildrahmens in dem vereinfachten Clip gemäß Benutzerbetrachtungsinformationen, die dem Video, das verarbeitet werden soll, zugeordnet sind, wobei die Benutzerbetrachtungsinformationen, die dem Video, das verarbeitet werden soll, zugeordnet sind, zumindest eine der Folgenden enthalten: eine Anzahl von Malen, die jeder Bildrahmen in dem Video, das verarbeitet werden soll, von einem Nutzer markiert wird, oder eine Anzahl von Malen, die jeder Bildrahmen in dem Video, das verarbeitet werden soll, gültig von dem Benutzer betrachtet wird, bestimmt durch eine Anzahl von Malen, die der Bildrahmen bei einer normalen Geschwindigkeit ohne Vorspulen, Mehrfachgeschwindigkeit-Abspielen oder Überspringen-Abspielen abgespielt wird; und
sequentielles Verbinden (S104) von Bildrahmen mit Werten, die einer voreingestellten Bedingung entsprechen, um ein Verbindungsergebnis zu erhalten, und Bestimmen des Verbindungsergebnisses als ein Hot-Clip des Videos, das verarbeitet werden soll,
wobei das Filtern der Bildrahmen mit wiederholtem Inhalt in dem Video, das verarbeitet werden soll, folgende Schritte aufweist:
Erfassen einer Videobildsequenz des Videos, das verarbeitet werden soll;
Berechnen einer Inhaltswiederholungsrate zwischen Bildrahmen in der Videobildsequenz;
Bestimmen, ob die Inhaltswiederholungsrate einen ersten Schwellenwert überschreitet oder nicht;
Behalten, ansprechend auf ein Bestimmen, dass die Inhaltswiederholungsrate den ersten Schwellenwert überschreitet, eines von sich wiederholenden Bildrahmen in der Videobildsequenz und Herausfiltern der anderen Bildrahmen in den sich wiederholenden Bildrahmen; und
Behalten, ansprechend auf ein Bestimmen, dass die Inhaltswiederholungsrate den ersten Schwellenwert nicht überschreitet, der Bildrahmen in der Videobildsequenz,
und wobei das Auswerten (S103) jedes Bildrahmens in dem vereinfachten Clip gemäß Benutzerbetrachtungsinformationen, die dem Video, das verarbeitet werden soll, zugeordnet sind, folgende Schritte aufweist:
Erfassen eines ersten Gewichts jedes Bildrahmens, der markiert ist, und eines zweiten Gewichts jedes Bildrahmens, der gültig betrachtet wird;
Erhalten eines ersten Werts jedes Bildrahmens gemäß der Anzahl an Malen, die jeder Bildrahmen markiert ist, und dem ersten Gewicht, und Erhalten eines zweiten Werts jedes Bildrahmens gemäß der Anzahl an Malen, die jeder Bildrahmen gültig betrachtet wird, und dem zweiten Gewicht; und
Addieren des ersten Werts und des zweiten Werts und Bestimmen einer Summe des ersten Werts und des zweiten Werts als ein Wert jedes Bildrahmens.

2. Das Verfahren gemäß Anspruch 1, bei dem das Erfassen der Anzahl an Malen, die jeder Bildrahmen in dem Video, das verarbeitet werden soll, von dem Nutzer markiert wird, folgende Schritte aufweist:
Bereitstellen eines Markierungsknopfs bei einem Vorgang des Abspielens des Videos, das verarbeitet werden soll; und
Zählen einer Anzahl an Malen, die der Markierungsknopf für jeden Bildrahmen bei dem Vorgang des Abspielens des Videos, das verarbeitet werden soll, betätigt wird, als die Anzahl an Malen, die jeder Bildrahmen in dem Video, das verarbeitet werden soll, von dem Benutzer markiert wird.

3. Das Verfahren gemäß einem der vorhergehenden Ansprüche, bei dem das Erfassen der Anzahl an Malen, die jeder Bildrahmen in dem Video, das verarbeitet werden soll, gültig von dem Benutzer betrachtet wird, folgende Schritte aufweist:
Bestimmen einer Abspielgeschwindigkeit für jeden Bildrahmen bei dem Vorgang des Abspielens des Videos, das verarbeitet werden soll; und
Zählen einer Anzahl an Malen, die jeder Bildrahmen in dem Video, das verarbeitet werden soll, bei einer normalen Geschwindigkeit abgespielt wird, als die Anzahl an Malen, die jeder Bildrahmen in dem Video, das verarbeitet werden soll, gültig von dem Benutzer betrachtet wird.

4. Das Verfahren gemäß einem der vorhergehenden Ansprüche, das ferner folgende Schritte aufweist:
Anzeigen des Videos, das verarbeitet werden soll, und des Hot-Clips des Videos, das verarbeitet werden soll, um dem Benutzer zu ermöglichen, zum Anschauen auszuwählen.

5. Eine Vorrichtung zum Extrahieren eines Hot-Clips in einem Video, die folgende Merkmale aufweist:
eine Erfassungseinheit (201), die konfiguriert ist, ein Video zu erfassen, das verarbeitet werden soll;
eine Vereinfachungseinheit (202), die konfiguriert ist, Bildrahmen mit wiederholtem Inhalt in dem Video, das verarbeitet werden soll, zu filtern, um einen vereinfachten Clip des Videos, das verarbeitet werden soll, zu erhalten, wobei der vereinfachte Clip Bildrahmen mit verschiedenen Inhalten aufweist;
eine Auswertungseinheit (203), die konfiguriert ist, jeden Bildrahmen in dem vereinfachten Clip gemäß Benutzerbetrachtungsinformationen, die dem Video, das verarbeitet werden soll, zugeordnet sind, auszuwerten, wobei die Benutzerbetrachtungsinformationen, die dem Video, das verarbeitet werden soll, zugeordnet sind, für die Bewertungseinheit (203) zumindest eine der Folgenden enthalten: eine Anzahl an Malen, die jeder Bildrahmen in dem Video, das verarbeitet werden soll, von einem Benutzer markiert wird, und eine Anzahl an Malen, die jeder Bildrahmen in dem Video, das verarbeitet werden soll, gültig von dem Benutzer betrachtet wird, bestimmt durch eine Anzahl an Malen, die der Bildrahmen bei einer normalen Geschwindigkeit ohne Vorspulen, Mehrfachgeschwindigkeit-Abspielen oder Überspringen-Abspielen abgespielt wird; und
eine Verarbeitungseinheit (204), die konfiguriert ist, Bildrahmen mit Werten, die einer voreingestellten Bedingung entsprechen, sequentiell zu verbinden, um ein Verbindungsergebnis zu erhalten, und das Verbindungsergebnis zu bestimmen als ein Hot-Clip des Videos, das verarbeitet werden soll,
wobei die Vereinfachungseinheit (202) beim Filtern der Bildrahmen mit wiederholtem Inhalt in dem Video, das verarbeitet werden soll, ferner konfiguriert ist zum:
Erfassen einer Videobildsequenz des Videos, das verarbeitet werden soll;
Berechnen einer Inhaltswiederholungsrate zwischen Bildrahmen in der Videobildsequenz;
Bestimmen, ob die Inhaltswiederholungsrate einen ersten Schwellenwert überschreitet oder nicht;
Behalten, ansprechend auf ein Bestimmen, dass die Inhaltswiederholungsrate den ersten Schwellenwert überschreitet, eines von sich wiederholenden Bildrahmen in der Videobildsequenz und Herausfiltern der anderen Bildrahmen in den sich wiederholenden Bildrahmen; und
Behalten, ansprechend auf ein Bestimmen, dass die Inhaltswiederholungsrate den ersten Schwellenwert nicht überschreitet, der Bildrahmen in der Videobildsequenz, und wobei die Auswertungseinheit (203) beim Auswerten jedes Bildrahmens in dem vereinfachten Clip gemäß Benutzerbetrachtungsinformationen, die dem Video, das verarbeitet werden soll, zugeordnet sind, ferner konfiguriert ist zum:
Erfassen eines ersten Gewichts jedes Bildrahmens, der markiert ist, und eines zweiten Gewichts jedes Bildrahmens, der gültig betrachtet ist;
Erhalten eines ersten Werts jedes Bildrahmens gemäß der Anzahl an Malen, die jeder Bildrahmen markiert ist, und dem ersten Gewicht, und Erhalten eines zweiten Werts jedes Bildrahmens gemäß der Anzahl an Malen, die jeder Bildrahmen gültig betrachtet wird, und dem zweiten Gewicht; und
Addieren des ersten Werts und des zweiten Werts und Bestimmen einer Summe des ersten Werts und des zweiten Werts als ein Wert jedes Bildrahmens,

6. Die Vorrichtung gemäß Anspruch 5, bei der die Auswertungseinheit (203) beim Erfassen der Anzahl an Malen, die jeder Bildrahmen in dem Video, das verarbeitet werden soll, von dem Nutzer markiert wird, ferner konfiguriert ist zum:
Bereitstellen eines Markierungsknopfs bei einem Vorgang des Abspielens des Videos, das verarbeitet werden soll; und
Zählen einer Anzahl an Malen, die der Markierungsknopf für jeden Bildrahmen bei dem Vorgang des Abspielens des Videos, das verarbeitet werden soll, betätigt wird, als die Anzahl an Malen, die jeder Bildrahmen in dem Video, das verarbeitet werden soll, von dem Benutzer markiert wird; oder
die Auswertungseinheit (203) beim Erfassen der Anzahl an Malen, die jeder Bildrahmen in dem Video, das verarbeitet werden soll, gültig von dem Benutzer betrachtet wird, ferner konfiguriert ist zum:
Bestimmen einer Abspielgeschwindigkeit für jeden Bildrahmen bei dem Vorgang des Abspielens des Videos, das verarbeitet werden soll; und
Zählen einer Anzahl an Malen, die jeder Bildrahmen in dem Video, das verarbeitet werden soll, bei einer normalen Geschwindigkeit abgespielt wird, als die Anzahl an Malen, die jeder Bildrahmen in dem Video, das verarbeitet werden soll, gültig von dem Benutzer betrachtet wird.

7. Ein nicht flüchtiges computerlesbares Speichermedium mit Computeranweisungen, die auf demselben gespeichert sin, wobei die Computeranweisungen einem Computer ermöglichen, das Verfahren gemäß einem der Ansprüche 1 bis 4 zu implementieren.

8. Ein Computerprogramm mit ausführbaren Anweisungen, die konfiguriert sind, um einen Computer zu veranlassen, das Verfahren gemäß einem der Ansprüche 1 bis 4 zu implementieren.

## Revendications

1. Procédé d'extraction d'un clip chaud dans une vidéo, comprenant le fait de:
acquérir (S101) une vidéo à traiter;
filtrer (S102) les trames d'image avec un contenu répété dans la vidéo à traiter, de manière à obtenir un clip simplifié de la vidéo à traiter, où le clip simplifié présente des trames d'image avec des contenus différents;
attribuer un score (S103) à chaque trame d'image dans le clip simplifié en fonction des informations de visualisation de l'utilisateur associées à la vidéo à traiter, où les informations de visualisation de l'utilisateur associées à la vidéo à traiter contiennent au moins l'un parmi un nombre de fois que chaque trame d'image dans la vidéo à traiter est marquée par un utilisateur, ou un nombre de fois que chaque trame d'image dans la vidéo à traiter est visualisée de manière valide par l'utilisateur déterminé par un nombre de fois que la trame d'image est reproduite à une vitesse normale sans avance rapide, reproduction à de multiples vitesses ou reproduction par sauts; et
assembler (S104) en séquence les trames d'image avec des scores remplissant une condition prédéfinie pour obtenir un résultat d'assemblage, et déterminer le résultat d'assemblage comme clip chaud de la vidéo à traiter,
dans lequel le filtrage des trames d'image avec un contenu répété dans la vidéo à traiter comprend le fait de:
acquérir une séquence d'images vidéo de la vidéo à traiter;
calculer un taux de répétition de contenu entre les trames d'image dans la séquence d'images vidéo;
déterminer si le taux de répétition de contenu excède ou non un premier seuil;
retenir, en réponse à la détermination que le taux de répétition de contenu excède le premier seuil, l'une des trames d'images répétitives dans la séquence d'images vidéo et sortir par filtrage les autres trames d'images dans les trames d'images répétitives; et
retenir, en réponse à la détermination que le taux de répétition de contenu n'excède pas le premier seuil, les trames d'image dans la séquence d'images vidéo,
et dans lequel l'attribution d'un score (S103) à chaque trame d'image dans le clip simplifié selon les informations de visualisation de l'utilisateur associées à la vidéo à traiter comprend le fait de:
acquérir un premier poids de chaque trame d'image qui est marquée et un deuxième poids de chaque trame d'image qui est visualisée de manière valide;
obtenir un premier score de chaque trame d'image selon le nombre de fois que chaque trame d'image est marquée et le premier poids, et obtenir un deuxième score de chaque trame d'image selon le nombre de fois que chaque trame d'image est visualisée de manière valide et le deuxième poids; et
additionner le premier score et le deuxième score, et déterminer une somme du premier score et du deuxième score comme score de chaque trame d'image.

2. Procédé selon la revendication 1, dans lequel l'acquisition du nombre de fois que chaque trame d'image de la vidéo à traiter est marquée par l'utilisateur comprend le fait de:
prévoir un bouton de marquage dans un processus de reproduction de la vidéo à traiter; et
compter un nombre de fois que le bouton de marquage est déclenché pour chaque trame d'image dans le processus de reproduction de la vidéo à traiter, comme le nombre de fois que chaque trame d'image dans la vidéo à traiter est marquée par l'utilisateur.

3. Procédé selon l'une quelconque des revendications précédentes, dans lequel l'acquisition du nombre de fois que chaque trame d'image dans la vidéo à traiter est visualisée de manière valide par l'utilisateur comprend le fait de:
déterminer une vitesse de reproduction pour chaque trame d'image dans le processus de reproduction de la vidéo à traiter; et
compter un nombre de fois que chaque trame d'image dans la vidéo à traiter est reproduite à une vitesse normale, comme le nombre de fois que chaque trame d'image dans la vidéo à traiter est visualisée de manière valide par l'utilisateur.

4. Procédé selon l'une quelconque des revendications précédentes, comprenant par ailleurs le fait de:
afficher la vidéo à traiter et le clip chaud de la vidéo à traiter pour permettre à l'utilisateur de sélectionner pour visualisation.

5. Appareil d'extraction d'un clip chaud dans une vidéo, comprenant:
une unité d'acquisition (201) configurée pour acquérir une vidéo à traiter;
une unité de simplification (202) configurée pour filtrer les trames d'image avec un contenu répété dans la vidéo à traiter, de manière à obtenir un clip simplifié de la vidéo à traiter, où le clip simplifié présente des trames d'image avec des contenus différents;
une unité d'attribution d'un score (203) configurée pour attribuer un score à chaque trame d'image dans le clip simplifié selon des informations de visualisation d'utilisateur associées à la vidéo à traiter, où, pour l'unité d'attribution d'un score (203), les informations de visualisation d'utilisateur associées à la vidéo à traiter contiennent au moins l'un parmi: un nombre de fois que chaque trame d'image dans la vidéo à traiter est marquée par un utilisateur, et un nombre de fois que chaque trame d'image dans la vidéo à traiter est visualisée de manière valide par l'utilisateur, déterminé par un nombre de fois que la trame d'image est reproduite à une vitesse normale sans avance rapide, reproduction à de multiples vitesses ou reproduction par sauts; et
une unité de traitement (204) configurée pour assembler en séquence les trames d'image avec des scores remplissant une condition prédéfinie pour obtenir un résultat d'assemblage, et déterminer le résultat d'assemblage comme clip chaud de la vidéo à traiter,
dans lequel l'unité de simplification (202), lors du filtrage des trames d'image avec un contenu répété dans la vidéo à traiter, est par ailleurs configurée pour:
acquérir une séquence d'images vidéo de la vidéo à traiter;
calculer un taux de répétition de contenu entre les trames d'image dans la séquence d'images vidéo;
déterminer si le taux de répétition de contenu excède ou non un premier seuil;
retenir, en réponse à la détermination que le taux de répétition de contenu excède le premier seuil, l'une des trames d'images répétitives dans la séquence d'images vidéo et sortir par filtrage les autres trames d'images dans les trames d'images répétitives; et
retenir, en réponse à la détermination que le taux de répétition de contenu n'excède pas le premier seuil, les trames d'image dans la séquence d'images vidéo,
et dans lequel l'unité d'attribution d'un score (203), lors de l'attribution d'un score de chaque trame d'image dans le clip simplifié selon les informations de visualisation de l'utilisateur associées à la vidéo à traiter, est par ailleurs configurée pour:
acquérir un premier poids de chaque trame d'image qui est marquée et un deuxième poids de chaque trame d'image qui est visualisée de manière valide;
obtenir un premier score de chaque trame d'image selon le nombre de fois que chaque trame d'image est marquée et le premier poids, et obtenir un deuxième score de chaque trame d'image selon le nombre de fois que chaque trame d'image est visualisée de manière valide et le deuxième poids; et
additionner le premier score et le deuxième score, et déterminer une somme du premier score et du deuxième score comme score de chaque trame d'image.

6. Appareil selon la revendication 5, dans lequel l'unité d'attribution d'un score (203), lors de l'acquisition du nombre de fois que chaque trame d'image dans la vidéo à traiter est marquée par l'utilisateur, est par ailleurs configurée pour:
prévoir un bouton de marquage dans un processus de reproduction de la vidéo à traiter; et
compter un nombre de fois que le bouton de marquage est déclenché pour chaque trame d'image dans le processus de reproduction de la vidéo à traiter, comme le nombre de fois que chaque trame d'image dans la vidéo à traiter est marquée par l'utilisateur; ou
l'unité d'attribution d'un score (203), lors de l'acquisition du nombre de fois que chaque trame d'image dans la vidéo à traiter est visualisée de manière valide par l'utilisateur, est par ailleurs configurée pour:
déterminer une vitesse de reproduction pour chaque trame d'image dans le processus de reproduction de la vidéo à traiter; et
compter le nombre de fois que chaque trame d'image dans la vidéo à traiter est reproduite à une vitesse normale, comme le nombre de fois que chaque trame d'image dans la vidéo à traiter est visualisée de manière valide par l'utilisateur.

7. Support de mémoire non transitoire lisible par ordinateur présentant, y mémorisées, des instructions d'ordinateur, dans lequel les instructions d'ordinateur permettent à un ordinateur de mettre en oeuvre le procédé selon l'une quelconque des revendications 1 à 4.

8. Programme d'ordinateur comprenant des instructions pouvant être exécutées, configuré pour amener un ordinateur à mettre en oeuvre le procédé selon l'une quelconque des revendications 1 à 4.
